# FASCICULE DE BREVET EUROPEEN

(11) **EP 0 492 684 B1**
(45) Date de publication et mention de la délivrance du brevet: **01.05.1996**
(21) Numéro de dépôt: 91203089.7
(22) Date de dépôt: 26.11.1991
(51) Int. Cl.: G06K 7/06

(54) **Dispositif de lecture/écriture pour cartes à mémoire électronique**
Lese- und Schreibvorrichtung für elektronische Speicherkarten
Read/write device for electronic memory cards

(30) Priorité: 21.12.1990 FR 9016160
(43) Date de publication de la demande: 01.07.1992
(73) Titulaire: SCHLUMBERGER INDUSTRIES, F-92120 Montrouge (FR)
(72) Inventeur: Holtzer, Dominique, F-25000 BESANCON (FR); Gautherot, Daniel, F-25000 BESANCON (FR)

(56) Documents cités:
- EP-A- 0 254 316
- EP-A- 0 293 888
- EP-A- 0 313 093
- GB-A- 2 124 420

## Description

La présente invention a pour objet un dispositif de lecture/écriture pour cartes à mémoire électronique.

De façon plus précise, l'invention concerne un appareil qui permet de lire des informations stockées dans les circuits électroniques d'une carte à mémoire et/ou de modifier ces informations sur la base d'instructions reçues.

Un tel dispositif, qu'on appellera ultérieurement lecteur de carte, se compose essentiellement d'un boîtier qui comporte une fente d'introduction de la carte, d'un couloir de guidage de la carte vers une position de lecture ou de traitement et une tête de connexion qui, lorsque la carte est dans sa position de traitement, permet d'établir une liaison électrique entre le dispositif de traitement de l'information associé au lecteur et les circuits électroniques de la carte via les plages externes de contact électrique de celle-ci.

Il existe un grand nombre de types de lecteurs de carte. On peut distinguer un premier type de lecteurs dans lesquels l'introduction de la carte est entièrement manuelle, c'est-à-dire dans lesquels c'est l'usager qui pousse la carte dans le couloir de guidage jusqu'à ce que celle-ci arrive en position de traitement. Un deuxième type de lecteurs est dit motorisé. Dans ce cas c'est un système commandé par un moteur qui déplace la carte depuis une position initiale correspondant à l'introduction par l'usager jusqu'à la position de traitement telle que définie ci-dessus. La présente invention concerne ce deuxième type de lecteur.

Les demandes de brevet européen 0 274 288 et 0 287 417 décrivent des lecteurs de cartes du type manuel. En revanche la demande de brevet français 2 645 667 décrit un lecteur de carte motorisé.

On peut également, parmi les lecteurs de carte, distinguer ceux qui sont du type sans avalement, c'est-à-dire ceux dans lesquels une partie du corps de la carte reste à l'extérieur du lecteur dans la phase de traitement, et ceux qui sont dits à avalement dans lesquels la carte est entièrement introduite dans le lecteur de carte lors de la phase de traitement. Ce deuxième type de lecteur est nécessairement motorisé.

L'invention concerne un lecteur de carte sans avalement, c'est-à-dire dans lequel une partie de la carte reste visible pendant le traitement de celle-ci.

On comprend aisément en outre que dans le cas de lecteur à avalement l'utilisateur ne peut pas retirer sa carte par inadvertance avant la fin du traitement de celle-ci et il n'est donc pas nécessaire de prendre de dispositions particulières.

En revanche, lorsque le lecteur de carte n'est pas à avalement et que le traitement de la carte peut être un peu long, il faut s'assurer que l'usager ne peut pas retirer du lecteur sa carte par inadvertance avant la fin du traitement de celle-ci.

On sait également que, dans le cas où un lecteur de carte peut traiter des cartes bancaires, il est nécessaire de prévoir une zone de stockage protégée contre les effractions pour recueillir les cartes bancaires. Cette situation peut se présenter soit si la carte a été introduite plusieurs fois avec on numéro de code confidentiel erroné, soit si la carte est retenue à la suite d'une défaillance du système d'entraînement de la carte. On comprend donc que, si le lecteur est susceptible de traiter des cartes bancaires, même si le numéro de code n'est pas utilisé, il faut tenir compte de la possibilité d'un fonctionnement erroné du lecteur amenant à la confiscation de la carte, ce qui implique donc de mettre en place un réceptacle protégé contre l'effraction, augmentant ainsi très sensiblement le coût du lecteur.

Pour éviter cet accroissement de coût et s'affranchir des contraintes de sécurité liées à la confiscation d'une carte bancaire, une solution consiste à rendre impossible l'avalement de la carte, même en cas de défaillance du moteur du lecteur de carte.

Il faut encore ajouter que les lecteurs de carte à mémoire électronique peuvent faire l'objet d'actes de vandalisme qui consistent notamment à introduire dans le lecteur des éléments de carte, par exemple une demi-carte ce qui, dans les lecteurs classiques, va obturer le passage de guidage des cartes et rendre ainsi inutilisable le lecteur lorsque l'usager suivant présentera sa carte au lecteur.

Un objet de l'invention est de fournir un dispositif de lecture/écriture de carte à mémoire électronique qui permet d'éviter les actes de vandalisme mentionnés ci-dessus et qui, de plus, permet d'accepter des cartes bancaires tout en assurant la sécurité également mentionnée ci-dessus.

Pour atteindre ce but, selon l'invention, le dispositif de lecture/écriture pour cartes à mémoire électronique du type comportant un corps de carte et des plages externes de contacts électriques, comprend une fente d'introduction, un couloir de guidage de la carte définissant un plan d'introduction de la carte, un ensemble de connexion fixe apte à entrer en contact électrique avec les plages de contact de la carte lorsque celle-ci est en position de traitement et des moyens d'entraînement pour amener la carte en position de traitement et pour provoquer son éjection, le dispositif se caractérisant en ce qu'il comprend en outre un volet pivotant autour d'un axe parallèle au plan d'introduction comportant une première extrémité de détection apte à obturer au moins une partie de la fente d'introduction et une deuxième extrémité formant butée, ledit volet ayant une position de repos dans laquelle ladite fente est au moins partiellement obturée et ladite butée hors dudit plan d'introduction et une deuxième position relevée dans laquelle la fente est entièrement dégagée et la butée interposée dans ledit plan d'introduction pour définir la position de traitement de ladite carte, la distance entre la fente d'introduction et la butée dans sa deuxième position étant légèrement inférieure à la longueur de ladite carte, ledit volet passant de ladite position de repos à ladite deuxième position relevée sous l'effet de l'introduction de la carte dans ladite fente qui agit sur ladite première extrémité de détection.

On comprend qu'ainsi, lorsqu'une carte de dimensions normales est introduite dans le lecteur, le volet reste en position relevée. En conséquence, l'extrémité du volet formant butée reste interposée dans le plan d'introduction de la carte. De ce fait, même en cas de défaillance du système de commande du moteur, c'est-à-dire dans le cas où le moteur continuerait à entraîner la carte, cette butée interdit le déplacement de la carte. La carte ne peut donc être avalée de façon erronée.

On comprend également que, si une carte de longueur insuffisante est introduite par effraction dans le lecteur, dans une phase intermédiaire d'entraînement de la carte, celle-ci ne maintient plus en position haute le volet en raison de sa longueur réduite et ainsi l'extrémité du volet formant butée est escamotée, permettant ainsi l'entraînement de la carte frauduleuse vers le réceptacle de récupération.

D'autres caractéristiques et avantages de la présente invention apparaîtront plus clairement à la lecture de la description qui suit d'un mode de réalisation de l'invention donné à titre d'exemple non limitatif. La description se réfère aux figures annexées sur lesquelles :
- la figure 1 est une vue en coupe verticale du lecteur en position d'attente ;
- la figure 2 est une vue en coupe horizontale selon la ligne II-II de la figure 1 ;
- la figure 3 est une vue semblable à celle de la figure 1 mais montrant une carte en position de traitement ; et
- la figure 4 est une vue du lecteur semblable à celle de la figure 1 montrant celui-ci dans la phase de confiscation d'une carte mauvaise ou de tout autre objet ayant une longueur insuffisante.

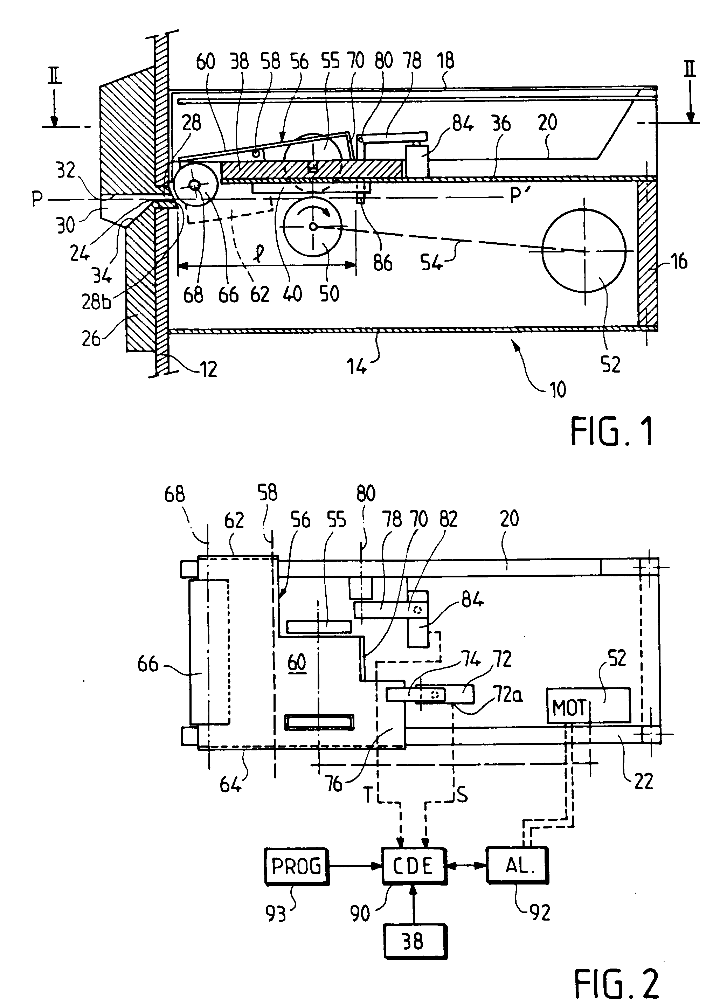

En se référant tout d'abord aux figures 1 et 2, on va décrire l'ensemble du lecteur de carte. Celui-ci comprend un boîtier 10 formé par une plaque avant 12, un fond 14, une platine 16 et un capot supérieur 18. Le boîtier est complété par deux parois latérales 20 et 22 mieux visibles sur la figure 2. La plaque avant 12 est percée d'une fente 24. Cette plaque avant 12 est munie d'une pièce de guidage 26 qui définit d'une part la fente d'introduction de carte 28 logée dans la fente 24 de la paroi 12 et un espace d'introduction 30 débouchant dans la fente 28. L'espace 30 est limité par la paroi horizontale 32 de la pièce 26 et par la paroi inférieure inclinée 34 de cette même pièce. Il va de soi que la plaque 12 et la pièce 26 pourraient faire partie de la machine sur laquelle le lecteur de carte est monté.

A l'intérieur du boîtier 10, on trouve des plaques de circuit électronique 36, 38 formant le circuit de traitement du lecteur fixées sur la platine 16. Sur la plaque 36 est également fixé une tête de connexion 40 qui est, par exemple, du type décrit et montré par la figure 2 de la demande de brevet européen 0 274 288. Comme on l'a déjà indiqué la tête de connexion 40 est constituée essentiellement par des lames flexibles conductrices dont l'extrémité de chacune vient en contact électrique avec les plages externes de la carte lorsque celle-ci est en position de traitement. Les lames sont reliées électriquement au circuit électronique 38 par des moyens non représentés.

Comme le montre la figure 1, des galets d'entraînement de la carte, tels que 50 sont disposés au droit de la tête de connexion 40. Les galets 50 sont entraînés par un moteur électrique 52 par l'intermédiaire d'une chaîne cinématique 54 non représentée en détails. Les galets d'entraînement 50 sont associés à des galets presseurs 55 disposés en regard des galets d'entraînement 50. Les galets 50 permettent ainsi lorsque le moteur 52 est alimenté de déplacer une carte introduite dans le lecteur jusqu'à sa position de traitement comme on l'expliquera ultérieurement. La fente 28 et les galets 50, 55 définissent un plan PP' d'introduction des cartes.

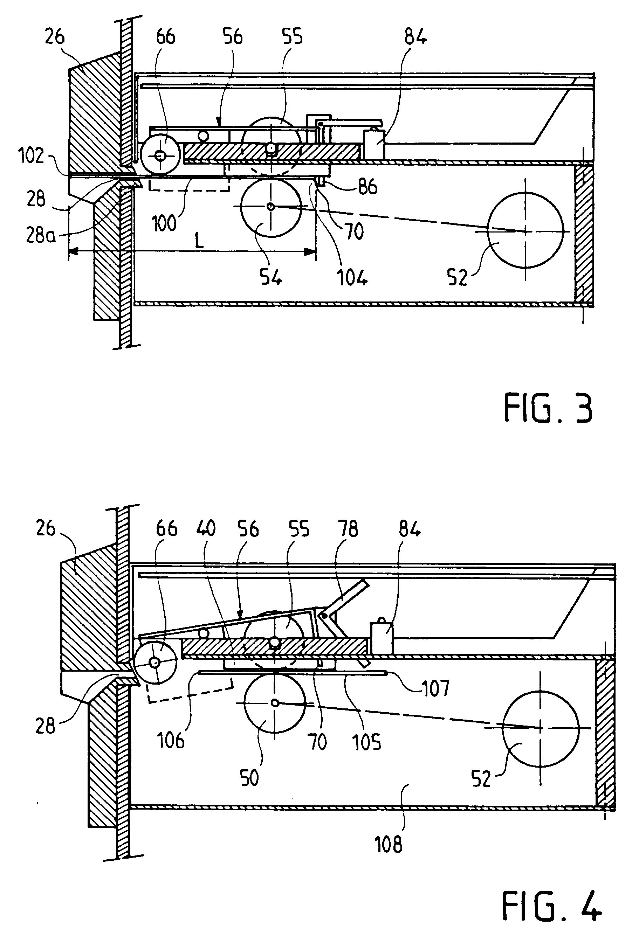

Le lecteur comporte également un volet mobile 56 monté à pivotement autour de l'axe 58 horizontal et perpendiculaire à la direction d'introduction de la carte. Le volet 56 est constitué essentiellement par une plaque 60 qui comporte deux flancs repliés 62 et 64. A une première extrémité, dite extrémité d'obturation, la plaque 60 est munie d'un rouleau 66 monté à pivotement sur l'axe 68 dont les extrémités sont engagées dans les flancs 62 et 64 de la plaque 60. Sous l'effet du poids du rouleau 68 ou d'un ressort de rappel non représenté, le volet 56 est incliné en venant prendre appui sur les parois latérales 20 et 22 du lecteur. Dans cette position le rouleau 66 obture la fente d'introduction 28 du lecteur de carte assurant ainsi sa protection contre les intempéries et autres poussières. Cependant, on comprend que lorsqu'on introduit une carte 100 par la fente 28 le bord avant 104 du corps de carte est capable d'agir sur le rouleau 66 pour provoquer le soulèvement de cette extrémité du volet 56 autorisant l'introduction d'une carte dans le lecteur (voir figure 3). A sa deuxième extrémité, la plaque 60 comporte une portion recourbée 70 formant butée mécanique. La longueur de la partie repliée 70 est telle que lorsque le volet est au repos, c'est-à-dire dans sa position représentée sur la figure 1, l'extrémité inférieure de la portion repliée 70 est disposée au-dessus du plan d'introduction PP' de la carte défini par la fente 28 et l'ensemble constitué par les galets d'entraînement 50 et les contre-galets 55. En revanche, la longueur de la partie repliée 70 est telle que, lorsque le volet a été soulevé par l'introduction de la carte, l'extrémité inférieure de la partie repliée 70 est engagée dans le plan d'introduction de la carte PP' constituant ainsi une butée mécanique limitant la profondeur d'introduction de la carte. On comprend que la position de la partie recourbée 70 de la plaque 60 est définie de telle manière que lorsque le bord avant 104 de la carte arrive en butée sur cette partie 70, elle se trouve dans la position de traitement, c'est-à-dire que le contact est établi entre les lames flexibles de la tête de connexion 40 et les plages externes du corps de la carte. En outre, la distance l entre la face interne 28b de la lèvre inférieure de la fente d'introduction et la partie repliée 70 formant butée est légèrement inférieure à la longueur L d'une carte authentique. Le lecteur comporte également un micro-contact 72 de détection d'ouverture de la fente d'introduction. Ce micro-contact 72 comporte une partie mobile 74 qui coopère avec un prolongement 76 de la plaque 60. Lorsque le volet mobile 56 est dans la position représentée sur la figure 1, le micro-contact 72 ne délivre aucun signal sur sa sortie 72a. En revanche, lorsque le volet 56 commence à pivoter autour de son axe 58, le micro-contact 72 est excité et délivre sur sa sortie 72a un signal S.

Le lecteur comporte encore un détecteur de fin de course constitué par le levier coudé 78 monté pivotant autour de l'axe 80. Au repos, sous l'effet d'un ressort de rappel non représenté, la branche 82 du levier 78 agit sur un micro-contact 84. Lorsque la carte est introduite dans le lecteur, son bord avant agit sur l'autre extrémité 86 du levier 78, ce qui provoque la délivrance par le micro-contact 84 d'un signal de détection T. Bien entendu, l'extrémité 86 du levier 78 est disposé légèrement en avant, selon la direction d'introduction de la carte, de l'extrémité de la partie coudée 70 du volet 56 servant de butée mécanique.

Le lecteur comporte également un ensemble électrique constitué par un circuit de commande 90 qui reçoit d'une part les signaux logiques S et T délivrés par les micro-contacts 72 et 84 et qui commande le circuit d'alimentation 92 du moteur 52. Le circuit de commande 90 est également relié à une mémoire de programme 93 et enfin il reçoit des signaux du circuit électronique 38 de gestion de l'ensemble du lecteur de carte.

En se référant maintenant aux figures 1, 3 et 4 on va décrire le fonctionnement du lecteur de carte.

Au repos le lecteur est dans la position représentée sur la figure 1. Le volet 56 est dans sa position abaissée, position dans laquelle le rouleau 66 obture la fente d'introduction 28. Par ailleurs, le moteur 52 n'est pas alimenté, le détecteur d'ouverture 72 ne délivre aucun signal et le détecteur de fin de course 84 ne délivre non plus aucun signal.

Lorsque l'usager veut introduire sa carte 100 normalement dans la fente 28, le bord avant 104 de la carte provoque le soulèvement du rouleau 66 et donc le pivotement du volet 56. Simultanément, le détecteur d'introduction de carte 72 délivre un signal S qui commande l'activation du moteur 52. En outre, du fait du pivotement du volet 56, la partie repliée 70 vient en position de butée mécanique. Dès que le bord avant du corps de carte est saisi par le galet 50, la carte est entraînée, ce qui provoque l'enfoncement de la carte. Dans un premier temps, le bord avant du corps de carte agit sur l'extrémité 86 du levier 78 de fin de course, ce qui provoque la délivrance du signal T par le micro-contact 84. La carte arrive en butée sur l'extrémité 86 de la partie repliée 70 du volet. A la réception du signal T, le circuit de commande 90 coupe l'alimentation du moteur 52. En outre, comme le montre la figure 3, dans sa position de traitement le bord arrière 102 de la carte affleure la face antérieure de la pièce 26 de guidage. Dans cette position, on voit que la carte 100 est toujours éventuellement accessible par la partie évasée d'introduction. Durant toute cette phase, le corps de carte est pincé entre les galets 50 et les contre-galets 55 et sa partie arrière est en appui sur la lèvre inférieure 28a de la fente d'introduction 28. Le rouleau 66 est en appui sur la face supérieure de la carte, ce qui empêche mécaniquement le volet 56 de s'abaisser et de revenir à la position de repos. La butée 70 demeure donc dans le plan PP' d'introduction.

Dans le cas où le traitement de la carte nécessite une opération d'écriture dans le circuit de la carte et surtout dans le cas où cette opération demande un certain temps, il est intéressant de prévoir que le circuit de traitement 38 émette vers le circuit de commande 90 un signal de commande d'alimentation sous tension réduite de telle manière que le moteur 52 se comporte comme un frein exerçant une force suffisante pour empêcher un retrait de la carte par inadvertance. Cependant cette force n'est pas suffisante pour empêcher le retrait volontaire de la carte par son bord faisant saillie hors de la fente 28.

Lorsque le traitement de la carte par le circuit 38 est terminé, le circuit de commande 90 reçoit une instruction qui provoque la commande du moteur 52 dans le sens inverse pour provoquer l'éjection de la carte hors du lecteur. Une fois que la carte a été retirée du lecteur, le volet mobile 56 reprend sa position de repos représentée sur la figure 1, le détecteur d'introduction 72 cesse alors d'émettre le signal S et le moteur 52 n'est plus alimenté.

La figure 4 illustre le cas où l'objet 104 introduit dans le lecteur n'est pas une carte authentique, c'est-à-dire qu'elle a une longueur, selon la direction d'introduction, inférieure à la longueur L d'une vraie carte. Dans ce cas, dans une première phase, le volet est soulevé, ce qui provoque l'émission du signal S. Le moteur 52 par l'intermédiaire des galets 50 provoque l'avancement de la carte. Cependant, compte tenu de la longueur réduite de l'objet 105, on comprend que son bord arrière 106 ne maintient plus en position relevée le volet mobile 56 lorsque son bord avant 107 atteint l'extrémité 84 du levier de détection de fin de course et la sortie 72a du détecteur 72 n'émet donc plus le signal S. Dans cette configuration des signaux S et T, le circuit de commande 90 à la réception du signal T délivré par le détecteur de fin de course continue à alimenter le moteur 52 pour provoquer l'avancement de l'objet 105. Comme le volet 56 a repris sa position de repos la butée de fin de course 70 est escamotée et l'objet 105 est entraîné vers un réceptacle 108 de recueil des objets autres qu'une carte authentique.

On comprend que, en revanche, si une carte authentique est introduite et que, par une défaillance du circuit de commande 90, le moteur 52 continuait à être alimenté, la carte ne pourrait continuer à progresser sous l'action des galets 50 du fait de la présence de la butée 70. On évite ainsi même en cas de défaillance de provoquer la confiscation de la carte. On comprend également que, même si le moteur devenait défaillant au moment où il doit provoquer l'éjection de la carte, celle-ci pourrait toujours être récupérée par l'usager puisque son bord arrière 102 ferait toujours saillie à l'extérieur de la fente d'introduction 28.

Il faut souligner que le rouleau 66 du volet 56 joue un triple rôle. Il protège contre la poussière le lecteur ; il sert de détecteur d'introduction de carte ou de tout autre objet dans le lecteur ; il sert de palpeur pour vérifier la longueur de la carte ou de l'objet introduit, en coopération avec le détecteur de fin de course. En conséquence, si le lecteur n'est pas dans un site exposé, c'est-à-dire s'il n'est pas nécessaire de le protéger contre les intempéries, il suffit que la première extrémité du volet remplisse les deux autres fonctions. Dans ce cas, il suffira de munir la première extrémité du volet 56 d'un organe n'obturant qu'une partie de la largeur de la fente 28 et provoquant le soulèvement du volet lors de l'introduction d'une carte authentique.

Il apparaît également clairement qu'une carte de longueur réduite introduite par vandalisme ne peut bloquer le système. En effet, soit la longueur de cette carte est inférieure à la longueur l et la carte frauduleuse est envoyée dans le réceptacle 108 comme on l'a expliqué précédemment, soit sa longueur est comprise en l et L et son bord arrière est apparent hors de la fente d'introduction, ce qui permettra son extraction manuelle.

## Revendications

1. Dispositif de lecture/écriture pour cartes à mémoire électronique du type comportant un corps de carte et des plages externes de contact électrique, comprenant une fente d'introduction, un couloir de guidage de la carte, définissant un plan d'introduction de la carte, un ensemble de connexion fixe apte à entrer en contact électrique avec les plages de contact de la carte lorsque celle-ci est en position de traitement et des moyens d'entraînement pour amener la carte en position de traitement et pour provoquer son éjection, caractérisé en ce qu'il comprend en outre un volet (56) pivotant autour d'un axe parallèle au plan d'introduction (PP') comportant une première extrémité (66) de détection apte à obturer au moins une partie de la fente d'introduction (28) et une deuxième extrémité (70) formant butée, ledit volet (56) ayant une position de repos dans laquelle ladite fente (28) est au moins partiellement obturée et ladite butée (70) hors dudit plan d'introduction (PP') et une deuxième position relevée dans laquelle la fente (28) est entièrement dégagée et la butée (70) interposée dans ledit plan d'introduction pour définir la position de traitement de ladite carte, la distance (l) entre la fente d'introduction et la butée dans sa deuxième position étant légèrement inférieure à la longueur (L) de ladite carte (100), ledit volet (56) passant de ladite position de repos à ladite deuxième position relevée sous l'effet de l'introduction de la carte (100) dans ladite fente (28) qui agit sur ladite première extrémité de détection.

2. Dispositif selon la revendication 1, caractérisé en ce qu'il comprend en outre des premiers moyens (72) pour détecter le fait que ledit volet (56) quitte la position de repos et des moyens (90) pour activer les moyens d'entraînement de la carte (50, 52) dans le sens d'introduction en réponse à cette détection.

3. Dispositif selon l'une quelconque des revendications 1 et 2, caractérisé en ce qu'il comprend en outre des deuxièmes moyens (78, 84) pour détecter que ladite carte (100) arrive en position de traitement, lesdits deuxièmes moyens de détection étant disposés légèrement en avant de ladite butée (70) selon le sens d'introduction de la carte.

4. Dispositif selon la revendication 3, caractérisé en ce qu'il comprend des moyens (90, 92) pour commander lesdits moyens d'entraînement, en réponse à ladite deuxième détection, pour qu'ils maintiennent le bord avant de ladite carte contre ladite butée.

5. Dispositif selon les revendications 2 à 4, caractérisé en ce qu'il comprend en outre un réceptacle (108) pour recueillir les cartes ou objets de dimensions non valides, et des moyens (90, 92) pour maintenir l'activation des moyens d'entraînement (50, 52) dans le sens de l'introduction si lesdits premiers moyens de détection détectent le retour du volet (56) à sa position de repos avant que lesdits deuxièmes moyens de détection (78, 84) ne détectent l'arrivée de ladite carte ou dudit objet dans sa position de traitement, par quoi ladite carte invalide ou ledit objet est recueilli dans ledit réceptacle.

6. Dispositif selon l'une quelconque des revendications 1 à 5, caractérisé en ce qu'il comprend des moyens (90, 92) pour commander les moyens d'entraînement (50, 52) dans le sens de l'éjection de la carte en réponse à un signal de fin de traitement de la carte.

7. Dispositif selon l'une quelconque des revendications 1 à 6, caractérisé en ce que ledit volet (56) est constitué par une plaque (60) et en ce que ladite première extrémité est constituée par un rouleau (66) d'obturation monté pivotant sur ladite plaque apte à obturer toute la largeur de la fente.

8. Dispositif selon la revendication 7, caractérisé en ce que ladite butée est constituée par une partie repliée (70) de ladite plaque (60).

## Patentansprüche

1. Lese-/Schreibvorrichtung für elektronische Speicherkarten des Typs, der einen Kartenkorpus und externe elektrische Kontaktfelder umfaßt, umfassend einen Einführungsschlitz, einen Kartenführungskanal, der eine Einführebene der Karte begrenzt, eine stationäre Verbindungsbaugruppe, ausgebildet, um in elektrischen Kontakt mit den Kotaktfeldern der Karte zu treten, wenn diese in der Verarbeitungsposition ist, und Antriebsmittel zum Fördern der Karte in die Verarbeitungsposition und zum Bewirken ihres Ausstoßes, dadurch gekennzeichnet, daß sie ferner eine Klappe (56) umfaßt, die um eine Achse parallel zur Einführungsebene (PP') schwenkbeweglich ist und ein erstes Erfassungsende (66) aufweist, das mindestens teilweise eine Partie des Einführschlitzes (28) versperren kann und ein zweites Ende (70) aufweist, das einen Anschlag bildet, welche Klappe (56) eine Ruheposition hat, in der der Schlitz (28) mindestens teilweise versperrt ist und der Anschlag (70) außerhalb der Einführungsebene (PP') ist, sowie eine zweite angehobene Position aufweist, in der der Schlitz (28) vollständig frei liegt, und der Anschlag (70) in der Einführungsebene ist zum Definieren der Kartenverarbeitungsposition, wobei der Abstand (1) zwischen dem Einführungsschlitz und dem Anschlag in seiner zweiten Position etwas kleiner ist als die Länge (L) der Karte (100), wobei die Klappe (56) aus der genannten Ruheposition in die genannte zweite angehobene Position unter der Wirkung des Einführens der Karte (100) in den Schlitz (28), was auf das genannte erste Erfassungsenede einwirkt, übergeht.

2. Vorrichtung nach Anspruch 1, dadurch gekennzeichnet, daß sie ferner erste Mittel (72) zum Feststellen der Tatsache umfaßt, daß die Klappe (56) ihre Ruheposition verläßt und Mittel (90) umfaßt für das Aktivieren der Antriebsmittel der Karte (50, 52) in Richtung des Einführens in Reaktion auf diese Erkennung.

3. Vorrichtung nach einem der Ansprüche 1 und 2, dadurch gekennzeichnet, daß sie ferner zweite Mittel (78, 84) umfaßt zum Feststellen, daß die Karte (100) in der Verarbeitungsposition ankommt, welche zweiten Erfassungsmittel etwas vor dem Anschlag (70) in der Einführrichtung der Karte angeordnet sind.

4. Vorrichtung nach Anspruch 3, dadurch gekennzeichnet, daß sie Mittel (90, 92) umfaßt zum Steuern der Antriebsmittel in Reaktion auf die zweite Erkennung, damit sie die vordere Kante der Karte gegen den Anschlag halten.

5. Vorrichtung nach Ansprüchen 2 bis 4, dadurch gekennzeichnet, daß sie ferner einen Aufnehmer (108) umfaßt zum Auffangen von Karten oder Objekten mit ungültigen Abmessungen, sowie Mittel (90, 92), um die Aktivierung der Antriebsmittel (50, 52) in Einführrichtung aufrechtzuerhalten, wenn die ersten Erfassungsmittel die Rückkehr der Klappe (56) in ihre Ruheposition feststellen, bevor die zweiten Erfassungsmittel (78, 84) das Eintreffen der Karte oder des Objektes in der Verarbeitungsposition feststellen, wodurch die ungültige Karte oder das Objekt in dem Aufnehmer aufgefangen wird.

6. Vorrichtung nach einem der Ansprüche 1 bis 5, dadurch gekennzeichnet, daß sie Mittel (90, 92) umfaßt für das Steuern der Antriebsmittel (50, 52) in Ausstoßrichtung der Karte in Reaktion auf ein Signal für das Ende der Verarbeitung der Karte.

7. Vorrichtung nach einem der Ansprüche 1 bis 6, dadurch gekennzeichnet, daß die Klappe (56) von einer Platte (60) gebildet wird, und daß das erste Ende von einer Absperrolle (66) gebildet wird, die drehbeweglich auf der Platte montiert ist und ausgebildet ist, um die gesamte Breite des Schlitzes zu versperren.

8. Vorrichtung nach Anspruch 7, dadurch gekennzeichnet, daß der Anschlag von einer abgewinkelten Partie (70) der Platte (60) gebildet ist.

## Claims

1. A read/write apparatus for electronic memory cards of the type comprising a card body and external electrical contact pads, the apparatus comprising an insertion slot, a card guide chute defining a plane of insertion of the card, a fixed connector assembly adapted to make electrical contact with the card contact pads when the card is in a processing position, and drive means for bringing the card into the processing position and for ejecting the same, characterized in that the apparatus further comprises a flap (56) pivoted about an axis parallel to the plane of insertion (PP') and having a detecting, first end (66) adapted to block at least part of the insertion slot (28) and a second end (70) forming a stop, the said flap (56) having a position of rest in which the said slot (28) is at least partially blocked and the said stop (70) is out of the said plane of insertion (PP') and a retracted, second position in which the slot (28) is completely clear and the stop (70) is interposed in the said plane of insertion, so as to define the processing position for the said card, the distance (1) between the insertion slot and the stop in the second position being slightly less than the length (L) of the said card (100), the said flap (56) passing from the said position of rest into the said retracted, second position under the action of insertion of the card (100) into the said slot (28) so as to act on the said detecting, first end.

2. Apparatus according to claim 1, characterized in that it further comprises first means (72) for detecting that the said flap (56) has left the position of rest and means (90) responsive to this detection to actuate the card drive means (50, 52) in the sense of insertion.

3. Apparatus according to claim 1 or 2, characterized in that it further comprises second means (78, 84) for detecting when the said card (100) has arrived at the processing position, the said second detecting means being located slightly ahead of the said stop (70) relative the sense of insertion of the card.

4. Apparatus according to claim 3, characterized in that it comprises means (90, 92) for controlling the said drive means in response to the said second detection, so as to keep the leading edge of the said card against the said stop.

5. Apparatus according to claims 2 to 4, characterized in that it further comprises a receptacle (108) for reception of the cards or objects with invalid dimensions, and means (90, 92) for maintaining actuation of the drive means (50, 52) in the sense of insertion if the said first detecting means detect return of the flap (56) to its position of rest before the second detecting means (78, 84) detect arrival of the said card or the said object at its processing position, whereby the said invalid card or the said object is received in the said receptacle.

6. Apparatus according to any one of claims 1 to 5, characterized in that it comprises means (90, 92) for controlling the drive means (50, 52) in the sense of ejection of the card in response to a signal signalling the end of processing of the card.

7. Apparatus according to any one of claims 1 to 6, characterized in that the said flap (56) is formed by a plate (60) and in that the said first end is formed by an obturating roller (66) pivoted on the said plate and adapted to block the whole width of the slot.

8. Apparatus according to claim 7, characterized in that the said stop is formed by a bent part (70) of the said plate (60).
